# EUROPÄISCHE PATENTSCHRIFT

(11) **EP 2 703 238 B1**
(45) Veröffentlichungstag und Bekanntmachung des Hinweises auf die Patenterteilung: **29.04.2015**
(21) Anmeldenummer: 13181346.1
(22) Anmeldetag: 22.08.2013
(51) Int. Cl.: B60T 1/10, B60T 8/40, B60T 13/58

(54) **Steuervorrichtung für ein rekuperatives Bremssystem und Verfahren zum Betreiben eines rekuperativen Bremssystems**
Control device for a recuperative braking system and method for operating a recuperative braking system
Dispositif de commande pour un système de freinage récupératif et procédé de fonctionnement d'un système de freinage récupératif

(30) Priorität: 27.08.2012 DE 102012215138
(43) Veröffentlichungstag der Anmeldung: 05.03.2014
(73) Patentinhaber: ROBERT BOSCH GMBH, 70442 Stuttgart (DE)
(72) Erfinder: Steinmann, Jochen, 74245 Loewenstein (DE); Bauer, Urs, 74343 Sachsenheim (DE)

(56) Entgegenhaltungen:
- DE-A1-102007 043 592
- DE-A1-102008 003 664
- DE-A1-102010 041 651

## Beschreibung

Die Erfindung betrifft eine Steuervorrichtung für ein rekuperatives Bremssystem eines Fahrzeugs. Ebenso betrifft die Erfindung ein rekuperatives Bremssystem für ein Fahrzeug. Des Weiteren betrifft die Erfindung ein Verfahren zum Betreiben eines rekuperativen Bremssystems eines Fahrzeugs.

### Stand der Technik

In der GB 2 282 651 A ist ein Elektrofahrzeug mit einem hydraulischen Bremssystem beschrieben. Jedem der Räder des Fahrzeugs ist ein Radbremszylinder des hydraulischen Bremssystems zugeordnet, welcher über zumindest eine Bremsleitung an dem Hauptbremszylinder des hydraulischen Bremssystems angebunden ist. Außerdem ist an jedem der Räder jeweils ein elektrischer Motor angebracht, mittels welchem ein zusätzliches Abbremsen des zugeordneten Rades bewirkbar sein soll. Während eines Abbremsens der Räder mittels der elektrischen Motoren soll außerdem eine mittels eines Bremskraftverstärkers ausgeübte Kraft reduziert werden.

DE 10 2007 043592 A1 offfenbart eine Fahrzeugbremsanlage für Kraftfahrzeuge mit einem hydraulischen Bremssystem, wobei die Räder der zweiten Fahrzeugachse zeitweise von einem Elektromotor angetrieben werden, der zur Rekuperation von Bremsenergie als Generator betreibbar ist und im Generatorbetrieb eine Bremskraft an den Rädern der zweiten Fahrzeugachse bewirkt.

### Offenbarung der Erfindung

Die Erfindung schafft eine Steuervorrichtung für ein rekuperatives Bremssystem eines Fahrzeugs mit den Merkmalen des Anspruchs 1, ein rekuperatives Bremssystem für ein Fahrzeug mit den Merkmalen des Anspruchs 6 und ein Verfahren zum Betreiben eines rekuperativen Bremssystems eines Fahrzeugs mit den Merkmalen des Anspruchs 7.

### Vorteile der Erfindung

Mittels des realisierbaren Schließens des Trennventils, über welches der mindestens eine erste Radbremszylinder des ersten Bremskreises mit dem Hauptbremszylinder des Bremssystems verbunden ist, kann ein Steigern des in dem mindestens einen ersten Radbremszylinder vorliegenden Bremsdrucks trotz einer Drucksteigerung in den Hauptbremszylinder unterbunden werden. Auf diese Weise ist auch eine Zunahme des mittels des mindestens einen ersten Radbremszylinders auf das mindestens eine erste zugeordnete Rad ausgeübten ersten hydraulischen Bremsmoments verhinderbar. Somit kann mittels des mindestens einen Elektromotors ein größeres erstes Generator-Bremsmoment auf das mindestens eine erste Rad ausgeübt werden, ohne dass eine von einem Fahrer mittels der Betätigung des mindestens einen Eingabeelements vorgegebene Soll-Gesamtfahrzeugverzögerung überschritten wird. Die vorliegende Erfindung gewährleistet somit ein schnelleres Aufladen einer Fahrzeugbatterie bei einem gleichzeitigen verlässlichen Einhalten der von dem Fahrer vorgegebenen Soll-Gesamtverzögerung seines Fahrzeugs.

Die vorliegende Erfindung ermöglicht insbesondere die Nutzung mindestens eines Elektromotors zum Abbremsen der Räder mehrerer Fahrzeugachsen bei einem rekuperativen Bremssystem mit einem nicht-entkoppelbaren (fest an den Hauptbremszylinder angebundenen) zweiten Bremskreis und einem aufgrund der Ausstattung mit dem Trennventil entkoppelbaren ersten Bremskreis. Man kann dies auch so umschreiben, dass mittels der vorliegenden Erfindung die Räder einer (dem zweiten Bremskreis zugeordneten) nicht-verblendfähigen Achse und die Räder einer (dem ersten Bremskreis zugeordneten) verblendfähigen Achse durch den mindestens einen Elektromotor (mit-)abbremsbar sind. Somit kann die vorliegende Erfindung dazu genutzt werden, ein schnelleres Aufladen einer Fahrzeugbatterie eines Fahrzeugs mit der nicht-verblendfähigen Achse und der verblendfähigen Achse sicherzustellen.

Gleichzeitig ermöglicht die vorliegende Erfindung eine Ausstattung eines Fahrzeugs, von welchem nicht nur die Räder einer Achse mit dem mindestens einen Elektromotor abbremsbar sind, mit einem hydraulischen Bremssystems mit dem entkoppelbaren ersten Bremskreis und dem nicht-entkoppelbaren zweiten Bremskreis. Die vorliegende Erfindung vereinigt somit die Vorteile eines Abbremsens von einer gesteigerten Anzahl von Rädern mit dem mindestens einen Elektromotor und die Vorteile eines Bremssystems mit mindestens einem entkoppelbaren Bremskreis (by-wire-Bremssystem).

Die vorliegende Erfindung ermöglicht den Einsatz eines Bremssystems derart, dass zusätzlich zu dem mindestens einen dem ersten Bremskreis zugeordneten ersten Rad mindestens ein dem zweiten Bremskreis zugeordnetes zweites Rad generatorisch (mit-) abgebremst wird. Insbesondere ist es mittels der vorliegenden Erfindung möglich, während dieses Vorgangs das mindestens eine dem ersten Bremskreis zugeordnete erste Rad nach dem Schließen des Trennventils rein generatorisch abzubremsen. Gleichzeitig kann das mindestens eine dem zweiten Bremskreis zugeordnete zweite Rad mittels einer rekuperativen und hydraulischen Bremsmomentüberlagerung abgebremst werden. Dies gewährleistet einen vorteilhaften hohen Wirkungsgrad bei der Umwandlung der kinetischen Energie des Fahrzeugs in auf der Fahrzeugbatterie abgespeicherte elektrische Energie.

Es wird darauf hingewiesen, dass der Fahrer auch nach dem Schließen des Trennventils noch ein komfortables/standardgemäßes Bremsbetätigungsgefühl während der Betätigung eines an dem Hauptbremszylinder angebundenen Eingabeelements, wie beispielsweise eines Bremspedals, hat. Aufgrund des an dem Hauptbremszylinder auch nach dem Schließen des Trennventils noch hydraulisch angebundenen zweiten Bremskreises spürt der Fahrer während der Betätigung des an den Hauptbremszylinder angebundenen Eingabeelements eine Gegenkraft, deren Kraftverlauf den Bremsdruckaufbau in dem mindestens einem zweiten Radbremszylinder des zweiten Bremskreises entspricht. Der Fahrer spürt somit auch nach dem Schließen des Trennventils kein/kaum ein verändertes Verhalten des betätigten Eingabeelements. Gegenüber dem herkömmlichen Variieren der Kraft eines elektrischen oder anders gearteten Bremskraftverstärkers, welches der Fahrer aufgrund eines veränderten Bremsbetätigungsgefühls/Pedalgefühls wahrnimmt, realisiert die vorliegende Erfindung somit einen verbesserten Komfort für den Fahrer während der Betätigung des Eingabeelements.

In einer vorteilhaften Ausführungsform ist die Motor- und Hydraulikansteuereinrichtung zusätzlich dazu ausgelegt, unter Berücksichtigung zumindest des mindestens einen Sensorsignals, der ersten Soll-Größe, der zweiten Soll-Größe und/oder mindestens einer davon abgeleiteten Größe mindestens eine Soll-Bremsmomentgröße bezüglich eines mittels des mindestens einen ersten Radbremszylinders des ersten Bremskreises auf das mindestens eine zugeordnete erste Rad auszuübendes Soll-Bremsmoments festzulegen und mindestens eine hydraulische Komponente des ersten Bremskreises mittels mindestens eines Hydrauliksteuersignals so anzusteuern, dass ein Bremsdruck des mindestens einen ersten Radbremszylinders des ersten Bremskreises mittels der mindestens einen hydraulischen Komponente entsprechend der mindestens einen festgelegten Soll-Bremsmomentgröße einstellbar ist. Ausführungsbeispiele für die mindestens eine hydraulische Komponente werden unten noch beschrieben. Mittels der hier beschriebenen vorteilhaften Ansteuerung der mindestens einen hydraulischen Komponente des ersten Bremskreises durch die Motor- und Hydrauliksteuereinrichtung ist trotz einer zeitlich variierenden Einsetzbarkeit des mindestens einen Elektromotors ein verlässliches Einhalten der von dem Fahrer vorgegebenen Soll-Fahrzeugverzögerung realisierbar.

Beispielsweise kann die Motor- und Hydrauliksteuereinrichtung dazu ausgelegt sein, mindestens eine Pumpe des ersten Bremskreises, welche ansaugseitig mit einem Bremsflüssigkeitsreservoir und förderseitig mit dem mindestens einen ersten Radbremszylinder des ersten Brems-kreises verbunden ist, als die mindestens eine hydraulische Komponente mittels des mindestens einen Hydrauliksteuersignals so anzusteuern, dass der Bremsdruck des mindestens einen ersten Radbremszylinders des ersten Bremskreises mittels der mindestens einen Pumpe entsprechend der mindestens einen festgelegten Soll-Bremsmomentgröße steigerbar ist. Die hier beschriebene vorteilhafte Funktionsweise der Motor- und Hydrauliksteuereinrichtung kann beispielsweise dazu genutzt werden, eine Reduzierung des mittels des mindestens einen Elektromotors ausgeübten ersten Generator-Bremsmoments und/oder zweiten Generator-Bremsmoments zu kompensieren. Insbesondere ist somit trotz eines vollständigen Aufladens der Fahrzeugbatterie und/oder einer aktuellen Fahrzeuggeschwindigkeit unter einer Generatoreinsetz-Mindestgeschwindigkeit, welches eine Reduzierung/ein Wegfall des ersten Generator-Bremsmoments und/oder des zweiten Generator-Bremsmoments auslösen kann, das Fahrzeug noch verlässlich in den Stillstand bringbar.

Als Alternative oder als Ergänzung dazu kann die Motor- und Hydrauliksteuereinrichtung auch dazu ausgelegt sein, mindestens ein stetig stellbares Ventil des ersten Bremskreises, über welches der mindestens eine erste Radbremszylinder des ersten Bremskreises mit dem Bremsflüssigkeitsreservoir verbunden ist, als die mindestens eine hydraulische Komponente mittels des mindestens einen Hydrauliksteuersignals so anzusteuern, dass der Bremsdruck des mindestens einen ersten Radbremszylinders des ersten Bremskreises entsprechend der mindestens einen festgelegten Soll-Bremsmomentgröße reduzierbar ist. Das auf diese Weise reduzierte erste hydraulische Bremsmoment des mindestens einen ersten Radbremszylinders des ersten Bremskreises kann zu einer Steigerung des ersten Generator-Bremsmoments und/oder des zweiten Generator-Bremsmoments genutzt werden, wodurch der Wirkungsgrad der Umwandlung der kinetischen Energie des Fahrzeugs in elektrische Energie weiter steigerbar ist.

In einer weiteren vorteilhaften Ausführungsform ist die Motor- und Hydraulikansteuereinrichtung dazu ausgelegt, die erste Soll-Größe, die zweite Soll-Größe und/oder die mindestens eine Soll-Bremsmomentgröße unter Berücksichtigung zumindest eines ersten Sensorsignals bezüglich einer ersten Betätigungsstärke einer Betätigung eines Bremspedals und eines zweiten Sensorsignals bezüglich einer zweiten Betätigungsstärke einer Betätigung eines Gaspedals als das mindestens eine Sensorsignals festzulegen. Beispielsweise kann bereits ein Lösen des Gaspedals zum Aktivieren des mindestens einen Elektromotors genutzt werden, wodurch zusätzliche elektrische Energie gewinnbar und insbesondere in einer Notbremssituation ein schnelleres Abbremsen des Fahrzeugs bewirkbar ist.

Die oben aufgezählten Vorteile sind auch mittels eines rekuperativen Bremssystems für ein Fahrzeug mit einer entsprechenden Steuervorrichtung realisierbar. Weiterbildungen des rekuperativen Bremssystems entsprechend der oben beschriebenen Merkmale der Steuervorrichtung sind möglich.

Auch werden die oben beschriebenen Vorteile mittels eines Ausführens eines korrespondierenden Verfahrens zum Betreiben eines rekuperativen Bremssystems eines Fahrzeugs bewirkt. Auch das Verfahren kann entsprechend den oben beschriebenen Ausführungsformen und Weiterbildungen weiterentwickelt werden. Beispielsweise kann in einer Weiterbildung des Verfahrens bei kleinen Geschwindigkeiten (des Fahrzeugs) an einer dem zweiten Bremskreis zugeordneten nicht-verblendfähigen Achse der mindestens eine Elektromotor derart eingesetzt werden, dass die Fahrzeugverzögerung weitgehend konstant bleibt und erst bei sehr kleinen Geschwindigkeiten ein Übergang in den Stillstand mittels einer e-Funktion erfolgt. Dies gewährleistet ein angenehmes Bremsbetätigungsgefühl/Pedalgefühl für den Fahrer.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Steuervorrichtung;
- Fig. 2a bis 2c: eine schematische Darstellung und zwei Koordinatensysteme zum Erläutern einer ersten Ausführungsform des Verfahrens zum Betreiben eines rekuperativen Bremssystems eines Fahrzeugs; und
- Fig. 3: ein Flussdiagramm zum Erläutern einer zweiten Ausführungsform des Verfahrens zum Betreiben eines rekuperativen Bremssystems eines Fahrzeugs.

### Ausführungsformen der Erfindung

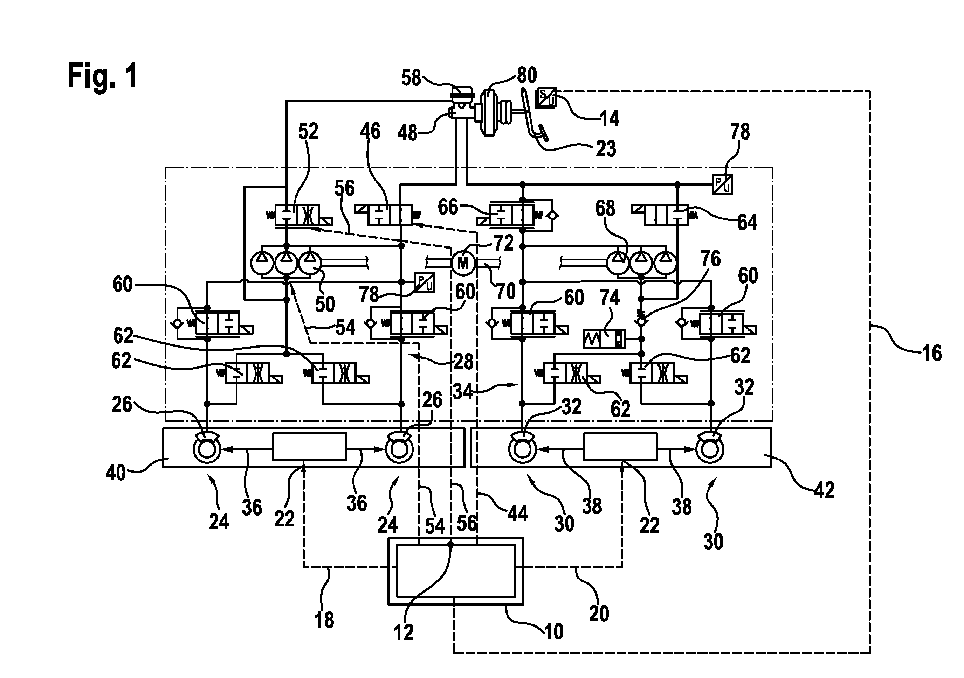

Fig. 1 zeigt eine schematische Darstellung einer Ausführungsform der Steuervorrichtung.

Die in Fig. 1 schematisch dargestellte Steuervorrichtung 10 ist dazu ausgelegt, das ebenfalls wiedergegebene rekuperative Bremssystem eines Fahrzeugs zu betreiben. Wie nachfolgend genauer ausgeführt wird, ist die Einsetzbarkeit der Steuervorrichtung 10 nicht auf einen bestimmten Typ eines rekuperativen Bremssystems limitiert. Stattdessen kann eine Vielzahl von verschiedenen Typen eines rekuperativen Bremssystems mittels der Steuervorrichtung 10, bzw. einer entsprechenden Abwandlung, betrieben werden.

Die Steuervorrichtung 10 hat eine Motor- und Hydraulikansteuereinrichtung 12, mittels welcher unter Berücksichtigung mindestens eines von einem fahrzeugeigenen Sensor 14 bereitgestellten Sensorsignals 16 eine erste Soll-Größe 18 und eine zweite Soll-Größe 20 mindestens eines Elektromotors 22 des Bremssystems festlegbar sind. Das mindestens eine von dem mindestens einen fahrzeugeigenen Sensor 14 bereitgestellte Sensorsignal 16 enthält eine Information bezüglich einer Betätigungsstärke einer Betätigung mindestens eines (fahrzeugeigenen) Eingabeelements 23. Das mindestens eine Eingabeelement 23 ist eine für eine manuelle und/oder pedale Betätigung des Fahrers zum Ansteuern mindestens einer Einrichtung seines Fahrzeugs ausgelegte Fahrzeugkomponente. Das mindestens eine Eingabeelement 23 kann beispielsweise ein Bremspedal und/oder ein Gaspedal sein. Die Ausführbarkeit des mindestens einen Eingabeelements 23 ist jedoch nicht auf die hier aufgeführten Beispiele limitiert. Der fahrzeugeigene Sensor ist beispielsweise ein Bremswunschsensor/ Bremswunscherkennungssensor, wie insbesondere ein Bremswegsensor (z.B. ein Stangenwegsensor), ein Bremskraftsensor, ein Bremsdrucksensor, ein Gaspedal-Kraftsensor, ein Gaspedal-Drucksensor und/oder ein Gaspedal-Wegsensor. Die hier aufgezählten möglichen Ausführungsformen des mindestens einen Sensors 14 sind jedoch nur beispielhaft zu interpretieren.

Unter der ersten Soll-Größe ist eine ungleich Null festlegbare Soll-Größe bezüglich eines mittels des mindestens einen Elektromotors 22 des Bremssystems auf mindestens ein erstes Rad 24, welches mindestens einem ersten Radbremszylinder 26 eines ersten Bremskreises 28 des Bremssystems zugeordnet ist, auszuübenden ersten Soll-Motorbremsmoments zu verstehen. Entsprechend ist mittels der Motor- und Hydrauliksteuereinrichtung 12 auch die zweite Soll-Größe 20 bezüglich eines mittels des mindestens einen Elektromotors 22 des Bremssystems auf mindestens ein zweites Rad 30, welches mindestens einem zweiten Radbremszylinder 32 eines zweiten Bremskreises 34 des Bremssystems zugeordnet ist, auszuübenden zweiten Soll-Motorbremsmoments ungleich Null festlegbar. Die erste Soll-Größe 18 und die zweite Soll-Größe 20 sind an den mindestens einen Elektromotor 22 ausgebbar.

Vorteilhafter Weise ist der mindestens eine Elektromotor 22 mittels der ausgegebenen Soll-Größen 18 und 20 so ansteuerbar, dass mittels des mindestens einen Elektromotors 22 ein der ersten Soll-Größe 18 entsprechendes erstes Generator-Bremsmoment 36 auf das mindestens eine erste Rad 24 und ein der zweiten Soll-Größe 20 entsprechendes zweites Generator-Bremsmoment 38 auf das mindestens eine zweite Rad 30 ausübbar sind. Die Räder 24 und 30 sind somit mit den Generator-Bremsmomenten 36 und 38 abbremsbar.

Unter einer Soll-Größe 18 und 20 können beispielsweise ein Soll-Motorbremsmoment und/oder ein Soll-Betriebsmodus des mindestens einen Elektromotors 22 verstanden werden. Auch eine andere eine Betriebsweise/Funktionsweise des mindestens einen Elektromotors 22 beschreibende/kennzeichnende Größe kann als mindestens eine Soll-Größe 18 und 20 mittels der Motor- und Hydraulikansteuereinrichtung 12 festlegbar sein.

Unter dem mindestens einen Elektromotor 22 kann beispielsweise ein einziger Elektromotor 22 verstanden werden. Ebenso können an dem Fahrzeug auch mehrere Elektromotoren 22 angebracht sein, mittels welchen die Generator-Bremsmomente 36 und 38 auf die Räder 24 und 30 ausübbar sind. Beispielsweise kann an jedem der Räder 24 und 30 ein Elektromotor 22 angeordnet sein. Ebenso können mehrere Elektromotoren 22 dazu ausgelegt sein, auf je eine zugeordnete Radachse der Räder 24 und/oder 30 so einzuwirken, dass die jeweiligen Generator-Bremsmomente 36 und 38 auf die Räder 24 und 30 ausgeübt werden. Der mindestens eine Elektromotor 22 kann insbesondere auch als elektrischer Antriebsmotor zum Beschleunigen der Räder 24 und/oder 30 ausgelegt sein. Die Einsetzbarkeit der Steuervorrichtung 10 ist jedoch nicht auf mindestens einen derartigen Elektromotor 22 limitiert.

Unter den ersten Rädern 24 und den zweiten Rädern 30 können insbesondere auch Räder verschiedener Fahrzeugachsen verstanden werden. Bei der Ausführungsform der Fig. 1 sind zwei erste Räder 24 einer ersten Achse 40 zugeordnet, welche beispielsweise als Hinterachse ausgebildet ist. Entsprechend sind zwei zweite Räder 30 an einer zweiten Achse 42 angebracht, welche insbesondere als Vorderachse nutzbar ist. Die Nutzbarkeit der Achsen 40 und 42 ist jedoch nicht auf eine Nutzung der ersten Achse 40 als Hinterachse und der zweiten Achse 42 als Vorderachse limitiert.

Mittels der Motor- und Hydraulikansteuereinrichtung 12 ist zusätzlich unter Berücksichtigung zumindest des mindestens einen Sensorsignals 16, der ersten Soll-Größe 18, der zweiten Soll-Größe 20 und/oder mindestens einer davon abgeleiteten Größe ein Schließsignal 44 an ein Trennventil 46, über welches der mindestens eine erste Radbremszylinder 26 des mindestens einen ersten Bremskreises 28 mit einem Hauptbremszylinder 48 des Bremssystems verbunden ist, ausgebbar. Der mindestens eine erste Radbremszylinder 26 ist somit mittels des Schließens des Trennventils 46 von dem Hauptbremszylinder 48 abkoppelbar. Der erste Bremskreis 28 kann deshalb als ein abkoppelbarer erster Bremskreis 28 (by-wire-Bremskreis) bezeichnet werden. Durch das Schließen des mindestens einen Trennventils 46 kann somit ein Bremsdruckaufbau in dem mindestens einen ersten Radbremszylinder 26 des ersten Bremskreises 28 trotz einer Betätigung des an dem Hauptbremszylinder 48 angebundenen Eingabeelements 23 verhindert werden. Ein mittels des mindestens einen ersten Radbremszylinders 26 des ersten Bremskreises 28 auf das mindestens eine zugeordnete erste Rad 24 ausgeübtes erstes hydraulisches Bremsmoment ist somit trotz der Betätigung des Eingabeelements 23 auf einem niedrigen Wert haltbar. Somit können ein vergleichsweise großes erstes Generator-Bremsmoment 36 und/oder zweites Generator-Bremsmoment 38 auf das mindestens eine erste Rad 24 oder 30 ausgeübt werden, ohne dass eine vom Fahrer vorgegebene Soll-Gesamtverzögerung des Fahrzeugs überschritten wird. Das Abkoppeln des mindestens einen ersten Radbremszylinders 26 des ersten Bremskreises 28 ermöglicht somit eine Steigerung der aus der kinetischen Energie des Fahrzeugs gewonnenen elektrischen Energie während eines Abbremsens des Fahrzeugs, ohne dass das Fahrzeug einen für den Fahrer als zu abrupt wahrnehmbaren Abbremsvorgang ausführt. Mittels der Steigerung der gewonnenen elektrischen Energie durch ein Einsetzen der Steuervorrichtung 10 können ein Kraftstoffverbrauch und eine Schadstoffemission des Fahrzeugs reduziert werden.

Bei der Ausführungsform der Fig. 1 ist die Motor- und Hydraulikansteuereinrichtung 12 zusätzlich dazu ausgelegt, unter Berücksichtigung zumindest des mindestens einen Sensorsignals 16, der ersten Soll-Größe 18, der zweiten Soll-Größe 20 und/oder mindestens einer davon abgeleiteten Größe mindestens eine Soll-Bremsmomentgröße bezüglich eines mittels des mindestens einen ersten Radbremszylinders 26 des ersten Bremskreises 28 auf das mindestens eine zugeordnete erste Rad 24 auszuübenden Soll-Bremsmoments festzulegen. Die mindestens eine Soll-Bremsmomentgröße kann beispielsweise mindestens ein Soll-Bremsdruck des mindestens einen ersten Radbremszylinders 26 des ersten Bremskreises 28 sein. Weitere Ausführungsbeispiele für die mindestens eine Soll-Bremsmomentgröße sind jedoch ebenso möglich.

Außerdem ist mittels der Motor- und Hydraulikansteuereinrichtung 12 mindestens eine hydraulische Komponente 50 und 52 des ersten Bremskreises 28 mittels mindestens eines Hydraulikansteuersignals 54 und 56 so ansteuerbar, dass ein Bremsdruck des mindestens einen ersten Radbremszylinders 26 des ersten Bremskreises 28 mittels der mindestens einen hydraulischen Komponente 50 und 52 entsprechend der mindestens einen festgelegten Soll-Bremsmomentgröße einstellbar ist. Z.B. umfasst die mindestens eine hydraulische Komponente 50 und 52 mindestens eine Pumpe 50 des ersten Bremskreises 28, welche ansaugseitig mit einem Bremsflüssigkeitsreservoir 58 und förderseitig mit dem mindestens einen ersten Radbremszylinder 26 des ersten Bremskreises 28 verbunden ist. Die mindestens eine Pumpe 50 des ersten Bremskreises 28 ist mittels eines ersten Hydrauliksteuersignals 54 so ansteuerbar, dass der Bremsdruck des mindestens einen ersten Radbremszylinders 26 des ersten Bremskreises 28 mittels der mindestens einen Pumpe 50 entsprechend der mindestens einen festgelegten Soll-Bremsmomentgröße steigerbar ist. Dazu pumpt die mindestens eine Pumpe 50 des ersten Bremskreises 28 Bremsflüssigkeit aus dem Bremsflüssigkeitsreservoir 58 in den mindestens einen ersten Radbremszylinder 26 des ersten Bremskreises 28.

Als die mindestens eine hydraulische Komponente 50 und 52 hat der erste Bremskreis 28 auch mindestens ein stetig stellbares Ventil 52, über welches der mindestens eine erste Radbremszylinder 26 des ersten Bremskreises 28 mit dem Bremsflüssigkeitsreservoir 58 verbunden ist. Die Motor- und Hydraulikansteuereinrichtung 12 ist auch dazu ausgelegt, das mindestens eine stetig stellbare Ventil 52 mittels eines zweiten Hydrauliksteuersignals 56 so anzusteuern, dass der Bremsdruck des mindestens einen ersten Radbremszylinders 26 des ersten Bremskreises 28 entsprechend der mindestens einen festgelegten Soll-Bremsmomentgröße reduzierbar ist. Dazu wird eine entsprechende Bremsflüssigkeitsmenge über das in einem zumindest teilgeöffneten Zustand gesteuerte mindestens eine stetig stellbare Ventil 52 aus dem mindestens einen ersten Radbremszylinder 26 des ersten Bremskreises 28 in das Bremsflüssigkeitsreservoir 58 verschoben. Durch die Reduzierung des mittels des mindestens einen ersten Radbremszylinders 26 des ersten Bremskreises 28 auf das mindestens eine zugeordnete Rad 24 ausgeübten ersten hydraulischen Bremsmoments können insbesondere die Generator-Bremsmomente 36 und 38 gesteigert werden. Somit ist eine größere Energiemenge von kinetischer Energie des Fahrzeugs in abspeicherbare elektrische Energie umwandelbar.

Als Ergänzung zu der Ausführungsform der Fig. 1 kann die Motor- und Hydraulikansteuereinrichtung 12 zusätzlich dazu ausgelegt sein, die erste Soll-Größe 18, die zweite Soll-Größe 20 und/oder die mindestens eine Soll-Bremsmomentgröße unter zusätzlicher oder alternativer Berücksichtigung eines Sensorsignals 16 bezüglich einer Betätigung eines Gaspedals festzulegen. Somit ist die Steuervorrichtung nicht auf ein Festlegen der ersten Soll-Größe 18, der zweiten Soll-Größe 20 und/oder der mindestens einen Soll-Bremsmomentgröße unter Berücksichtigung des Sensorsignals 16 bezüglich der Betätigung des Bremspedals als das mindestens eine Eingabeelement 23 limitiert. Deshalb kann z.B. bereits ein Lösen des Gaspedals zu einem Ausüben eines Generator-Bremsmoments 36 und/oder 38 auf mindestens eines der zugeordneten Räder 24 und 30 genutzt werden. Dies gewährleistet ein schnelleres Aufladen der Fahrzeugbatterie und ein frühzeitigeres Abbremsen des Fahrzeugs, insbesondere in einer Notbremssituation.

Das in Fig. 1 dargestellte Bremssystem kann als ein by-wire-Bremssystem umschrieben werden. Das Bremssystem umfasst den entkoppelbaren ersten Bremskreis 28 und den nicht-abkoppelbaren (unabtrennbar an dem Hauptbremszylinder 48 angebundenen) zweiten Bremskreis 34. Man kann ein mit dem Bremssystem ausgestattetes Fahrzeug auch als ein Fahrzeug mit zwei elektrisch angetriebenen Achsen 40 und 42 bezeichnen, wobei die erste Achse 40 entkoppelbar und die zweite Achse 42 nicht-entkoppelbar ist. Alternativ können beide Achsen 40 und 42 auch entkoppelbar (By-Wire-Achsen) sein.

Bei der Ausführungsform der Fig. 1 umfasst jeder der beiden Bremskreise 28 und 34 zwei Radbremszylinder 26 und 32. Außerdem umfasst jeder der beiden Bremskreise 28 und 34 je ein Radeinlassventil 60 und ein Radauslassventil 62 für jeden seiner Radbremszylinder 26 und 32. Der zweite Bremskreis 34 hat zusätzlich noch ein Hochdruckschaltventil 64 und ein Umschaltventil 66. Mindestens eine Pumpe 68 des zweiten Bremskreises 34 kann zusammen mit der mindestens einen Pumpe 50 des ersten Bremskreises 28 auf einer gemeinsamen Welle 70 eines Motors 72 liegen. Insbesondere können die Pumpen 50 und 68 der beiden Bremskreise 28 und 64 ansaugseitig mit den Radauslassventilen 62 verbunden sein, wobei zwischen der Pumpe 68 des zweiten Bremskreises 34 und den zugeordneten Radauslassventilen 62 noch eine (Niederdruck-)Speicherkammer 74 und ein Überdruckventil 76 liegen. Jeder der beiden Bremskreise 28 und 34 kann außerdem (auch unabhängig voneinander) noch mit mindestens einem Drucksensor 78 ausgestattet sein. In einer vorteilhaften Weiterbildung ist die Motor- und Hydraulikansteuereinrichtung 12 zusätzlich dazu ausgelegt, das mindestens eine Drucksensorsignal des mindestens einen Drucksensors 78 für ihre oben beschriebenen Funktionen zu berücksichtigen.

Die oberen Ausführungen zu dem in Fig. 1 dargestellten Bremssystem sind lediglich beispielhaft zu verstehen. Es wird darauf hingewiesen, dass die Steuervorrichtung 10 mit einer Vielzahl von verschiedenen Bremssystemen zusammenwirken kann. Insbesondere kann die Steuervorrichtung 10 auf einfache Weise so abgewandelt werden, dass sie auch mit einem anderen Typ eines Bremssystems als dem in Fig. 1 dargestellten vorteilhaft einsetzbar ist. Beispielsweise kann die Steuervorrichtung 10 auch dazu ausgelegt sein, mit einem Bremssystem mit zwei By-Wire-Achsen und/oder einem Pedalsimulator zusammenzuwirken.

Die Steuervorrichtung 10 kann in einer Weiterbildung auch zum Ansteuern mindestens eines weiteren Ventils 60 bis 66, der mindestens einen Pumpe 68 des zweiten Bremskreises 34 und/oder eines Bremskraftverstärkers 80 genutzt werden. Eine entsprechende Weiterbildung der Steuervorrichtung 10 ist mittels eines einfach ausführbaren Programmierschritts realisierbar. Die Steuervorrichtung 10 kann auch eine Untereinheit eines zentralen Fahrzeugsteuersystems sein. Insbesondere kann die Steuervorrichtung 10 auch dazu ausgelegt sein, zusätzlich zu den oben beschriebenen Funktionen noch eine ABS- oder ESP-Funktion auszuführen. Durch diese Multifunktionalität der Steuervorrichtung 10 können weitere Elektronikkomponenten eingespart werden.

Die oben beschriebenen Vorteile sind auch bei einem Bremssystem mit der Steuervorrichtung 10, bzw. mit einer an das Bremssystem angepassten Abwandlung davon, realisierbar.

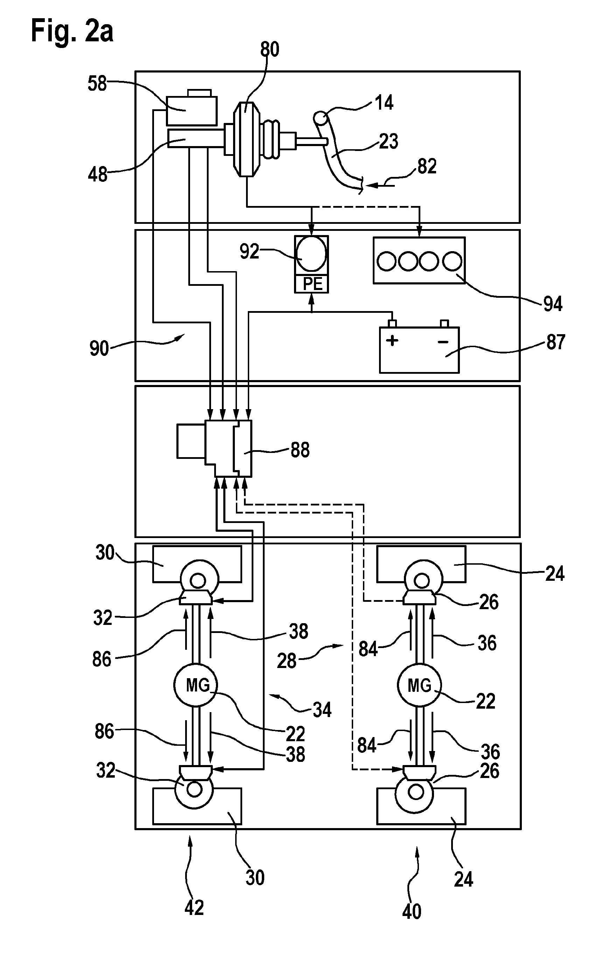

Fig. 2a bis 2c zeigen eine schematische Darstellung und zwei Koordinatensysteme zum Erläutern einer ersten Ausführungsform des Verfahrens zum Betreiben eines rekuperativen Bremssystems eines Fahrzeugs.

Das mittels der Fig. 2a bis 2c schematisch wiedergegebene Verfahren kann beispielsweise mit dem oben beschriebenen Bremssystem ausgeführt werden. Die Ausführbarkeit des Verfahrens ist jedoch nicht auf diesen Typ eines Bremssystems limitiert.

Zum Ausführen des Verfahrens wird mindestens eine Betätigungsstärke einer durch einen Fahrer des Fahrzeugs mit dem Bremssystem aktuell ausgeführten Betätigung 82 mindestens eines Eingabeelements 23 ermittelt. Beispielsweise kann dazu mindestens einer der oben beschriebenen Sensoren 14 eingesetzt werden. Unter Berücksichtigung der mindestens einen ermittelten Betätigungsstärke wird eine erste Soll-Größe bezüglich eines mittels mindestens eines Elektromotors 22 des Bremssystems auf mindestens ein erstes Rad 24, welches mindestens einem ersten Radbremszylinder 26 eines ersten Bremskreises 28 des Bremssystems zugeordnet ist, ausübenden ersten Soll-Motorbremsmoments ungleich Null festgelegt. Entsprechend wird eine zweite Soll-Größe bezüglich eines mittels des mindestens einen Elektromotors 22 des Bremssystems auf mindestens ein zweites Rad 30, welches mindestens einem zweiten Radbremszylinder 32 eines zweiten Bremskreises 34 des Bremssystems zugeordnet ist, ausübenden zweiten Soll-Motorbremsmoments ungleich Null unter Berücksichtigung der mindestens einen ermittelten Betätigungsstärke festgelegt. Der mindestens eine Elektromotor 22 wird anschließend so angesteuert, dass ein der ersten Soll-Größe entsprechendes erstes Generator-Bremsmoment 36 auf das mindestens eine erste Rad 24 und ein der zweiten Soll-Größe entsprechendes zweites Generator-Bremsmoments 38 auf das mindestens eine zweite Rad 30 ausgeübt werden.

In einem zusätzlichen Verfahrensschritt des Verfahrens wird ein (in Fig. 2a nicht dargestelltes) Trennventil, über welches der mindestens eine erste Radbremszylinder 26 des mindestens einen ersten Bremskreises 28 mit einem Hauptbremszylinder 48 des Bremssystems verbunden ist, unter Berücksichtigung der mindestens einen ermittelten Betätigungsstärke, der ersten Soll-Größe, der zweiten Soll-Größe und/oder mindestens einer davon abgeleiteten Größe geschlossen. Somit kann ein Bremsdruckaufbau in dem mindestens einen ersten Radbremszylinder 26 des ersten Bremskreises 28 trotz einer vergleichsweise großen Betätigungsstärke der Betätigung 82 verhindert werden. Damit bewirkt das Verfahren die oben schon beschriebenen Vorteile.

In einer vorteilhaften Ausführungsform des Verfahrens wird das Trennventil kurz vor einem Überwinden eines Leerwegs, über welches das als Bremseingabeelement ausgebildete Eingabeelement 23 an dem Hauptbremszylinder 48 angebunden ist, geschlossen. Im Bereich des Leerwegs kann an beiden Achsen 40 und 42 ausschließlich generatorisch gebremst werden. Nach einem Überschreiten des Leerwegs kann an der durch das Schließen des Trennventils entkoppelten ersten Achse 40 rein generatorisch gebremst werden. Demgegenüber kann an der nicht-entkoppelbaren zweiten Achse 42 generatorisch und hydraulisch gebremst werden. Der Fahrer hat somit auch nach dem Überwinden des Leerwegs durch sein direktes Einbremsen in den zweiten Bremskreis 34 noch ein vorteilhaftes Bremstätigungsgefühl.

Insbesondere nimmt der Fahrer das Schließen des Trennventils/Abkoppeln des ersten Bremskreises 28 während des Leerwegs nicht wahr. Dies ist ein signifikanter Vorteil des hier beschriebenen Verfahrens gegenüber einem herkömmlichen Reduzieren einer Bremswirkung eines hydraulischen Bremssystems durch Verringern der Kraft des Bremskraftverstärkers 80. Während der Fahrer ein Variieren der Kraft des Bremskraftverstärkers 80 aufgrund einer dadurch bewirkten unerwünschten Pedalrückwirkung spüren kann, ist das Schließen des Trennventils während des Leerwegs für den Fahrer nicht spürbar. Das hier beschriebene Verfahren bietet somit einen vorteilhaften Komfort für den Fahrer.

In einer vorteilhaften Weiterbildung des Verfahrens wird unter Berücksichtigung zumindest der mindestens einen Betätigungsstärke, der ersten Soll-Größe, der zweiten Soll-Größe und/oder mindestens einer davon abgeleiteten Größe mindestens eine Soll-Bremsmomentgröße bezüglich eines mittels des mindestens einen ersten Radbremszylinders 26 des ersten Bremskreises 28 auf das mindestens eine zugeordnete erste Rad 24 auszuübenden Soll-Bremsmoments festgelegt. Danach wird (bei einem geschlossenen Trennventil) mindestens eine hydraulische Komponente des (von dem Hauptbremszylinder 48 entkoppelten) ersten Bremskreises 28 so angesteuert, dass ein Bremsdruck des mindestens einen ersten Radbremszylinders 26 des ersten Bremskreises 28 mittels der mindestens einen hydraulischen Komponente entsprechend der mindestens einen festgelegten Soll-Bremsmomentgröße eingestellt wird.

Der mindestens eine erste Radbremszylinder 26 des ersten Bremskreises 28 übt danach ein erstes hydraulisches Bremsmoment 84 auf das mindestens eine zugeordnete Rad 24 aus, welches der mindestens einen Soll-Bremsmomentgröße entspricht. Auch ein mittels des mindestens einen zweiten Radbremszylinders 32 des zweiten Bremskreises 34 auf das mindestens eine zugeordnete zweite Rad 30 ausgeübtes zweites hydraulisches Bremsmoment 86 kann beim Einstellen/Variieren des ersten hydraulischen Bremsmoments 84 mitberücksichtigt werden. Somit können zeitliche Schwankungen der Betätigungsstärke, der ersten Soll-Größe und/oder der zweiten Soll-Größe mittels eines Variierens des ersten hydraulischen Bremsmoments 84 zumindest teilweise kompensiert/ausgeglichen werden. Insbesondere können mittels dieser Vorgehensweise zeitliche Schwankungen der Generator-Bremsmomente 36 und 38 verlässlich kompensiert/ausgeglichen werden.

Als die mindestens eine hydraulische Komponente des ersten Bremskreises 28 kann mindestens eine (nicht dargestellte) Pumpe des ersten Bremskreises 28, welche ansaugseitig mit einem Bremsflüssigkeitsreservoir 58 und förderseitig mit dem mindestens einen ersten Radbremszylinder 26 des ersten Bremskreises 28 verbunden ist, eingesetzt werden. Dabei kann die mindestens eine Pumpe so angesteuert werden, dass der Bremsdruck des mindestens einen ersten Radbremszylinders 26 des ersten Bremskreises 28 gesteigert wird. In der Regel ist ein Elektromotor 22 nur bei einer Fahrzeuggeschwindigkeit über einer Mindestgeschwindigkeit v0 und einem Batterie-Ladezustand einer aufladbaren Batterie 87 unter einem Höchstzustand als Generator einsetzbar. Mittels der hier beschriebenen Vorgehensweise kann jedoch eine wegfallende Einsetzbarkeit des mindestens einen Elektromotors 22 schnell durch das Aufbauen des Bremsdrucks des mindestens einen ersten Radbremszylinders 26 des ersten Bremskreises 28 kompensiert werden.

Ebenso kann mindestens ein (nicht dargestelltes) stetig stellbares Ventil des ersten Bremskreises 28, über welches der mindestens eine erste Radbremszylinder 26 des ersten Bremskreises 28 mit dem Bremsflüssigkeitsreservoir 58 verbunden ist, als die mindestens eine hydraulische Komponente angesteuert werden. Mittels eines Verschiebens von Bremsflüssigkeit über das in einem zumindest teil-geöffneten Zustand gesteuerte mindestens eine stetig stellbare Ventil kann der Bremsdruck des mindestens einen ersten Radbremszylinder 26 des ersten Bremskreises 28 schnell reduziert werden. Die Generator-Bremsmomente 36 und 38 des mindestens einen Elektromotors 22 können somit zum schnelleren Aufladen der Batterie 87 gesteigert werden.

Das Trennventil, die mindestens eine Pumpe des ersten Bremskreises 28 und das mindestens eine stetig stellbare Ventil des ersten Bremskreises 28 können Komponenten eines Hydraulikaggregats 88 sein, welches über Leitungen 90 mit den Hauptbremszylinder 48 und dem Bremsflüssigkeitsreservoir 58 verbunden ist. Das mittels des Verfahrens betreibbare Bremssystem kann auch mindestens eine Unterdruckpumpe 92 zum Zusammenwirken mit einem als Vakuum-Bremskraftverstärker ausgebildeten Bremskraftverstärkter 80 aufweisen. Das Ausführen des Verfahrens ist jedoch nicht auf ein Bremssystem mit einem Bremskraftverstärker 80 oder auf einen bestimmten Bremskraftverstärkertyp limitiert. Außerdem sind in Fig. 2a noch ein Verbrennungsmotor 94 des Fahrzeugs und die mittels des hier beschriebenen Verfahrens vergleichsweise schnell aufladbare Batterie 87 dargestellt.

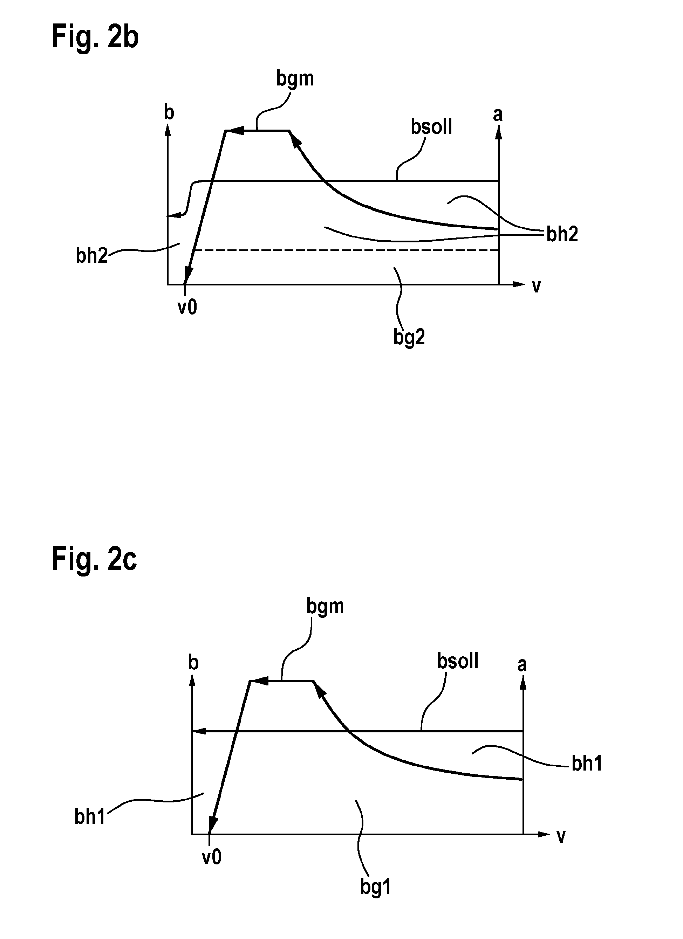

Das mittels der Fig. 2a bis 2c dargestellte Verfahren ermöglicht eine Nutzung von beiden Achsen 40 und 42 zum schnellen Aufladen der Batterie 87 durch Rekuperation. Die Koordinatensysteme der Fig. 2b und 2c geben die während eines Bremsvorgangs auf die beiden Achsen 40 und 42 ausgeübten Bremsmomente bg1, bg2, bh1 und bh2 wieder. Die Abszissen der Koordinatensysteme der Fig. 2b und 2c zeigen eine aktuelle Fahrzeuggeschwindigkeit v an. Die linken Ordinaten der Koordinatensysteme der Fig. 2b und 2c geben ein auf die jeweilige Achse 40 oder 42 ausgeübtes Bremsmoment b wieder. (Die linken Ordinaten der Koordinatensysteme der Fig. 2b und 2c stellen Beträge einer entsprechenden (negative) Beschleunigung a dar.)

Das Koordinatensystem der Fig. 2b gibt das auf die zweite Achse 42 ausgeübte zweite Generator-Bremsmoment bg2 und das ebenfalls auf die zweite Achse 42 ausgeübte zweite hydraulische Bremsmoment bh2 an. Das auf die erste Achse 40 ausgeübte erste Generator-Bremsmoment bg1 und das ebenfalls auf die erste Achse 40 ausgeübte erste hydraulische Bremsmoment bh1 sind in Fig. 2c eingetragen. Außerdem sind in beide Koordinatensysteme noch ein mittels des mindestens eines Elektromotors 22 auf die jeweilige Achse 40 oder 42 ausübbares maximales Generator-Bremsmoment bgm und ein auf die jeweilige Achse 40 oder 42 auszuübendes Soll-Gesamtbremsmoment bsoll eingetragen.

Ab einer Geschwindigkeit v über der Mindestgeschwindigkeit v0 ist ein Generator-Bremsmoment bg1 oder bg2 ungleich Null auf jede der beiden Achsen 40 und 42 ausübbar. Vor einem Überschreiten/Schließen des Leerwegs kann optionaler Weise an beiden Achsen 40 und 42 rein generatorisch gebremst werden (nicht dargestellt). Nach einem Überschreiten des Leerwegs liegt an der nicht-entkoppelbaren zweiten Achse 42 ein Soll-Gesamtbremsmoment bsoll an, welches sich aus dem zweiten Generator-Bremsmoment bg2 und dem zweiten hydraulischen Bremsmoment bh2 ergibt. Das zweite Generator-Bremsmoment bg2 kann dem mindestens einen Elektromotor 22 unabhängig von der aktuellen Geschwindigkeit v vorgegeben werden. Dies gewährleistet, dass der Fahrer trotz des auf die zweite Achse 42 ausgeübten zweiten Generator-Bremsmoments bg2 noch in den zweiten Bremskreis 34 einbremst und somit automatisch eine taktile Rückwirkung des Eingabeelements 23 spürt.

Gleichzeitig kann an der ersten Achse 40 rein generatorisch gebremst werden (bh1 gleich Null), sofern das auf die erste Achse 40 auszuübende Soll-Gesamtbremsmoment bsoll kleiner als das maximale Generator-Bremsmoment bgm ist. Falls das vom Fahrer vorgegebene auf die erste Achse 40 auszuübende Soll-Gesamtbremsmoment bsoll größer als das maximale Generator-Bremsmoment bgm ist, kann außerdem mittels der oben beschriebenen Vorgehensweise noch ein erstes hydraulisches Bremsmoment bh1 ungleich Null aufgebaut werden. Auch ein Verblenden eines variierenden maximalen Generator-Bremsmoments bgm ist mittels der oben beschriebenen Vorgehensweise ausführbar.

Für Geschwindigkeiten v ab einer Mindestgeschwindigkeit v0 kann deshalb ein vergleichsweise hohes Gesamt-Generator-Bremsmoment bg1 und bg2 auf die beiden Achsen 40 und 42 ausgeübt werden. Auch an der nicht-entkoppelbaren zweiten Achse 42 kann der mindestens eine Elektromotor 22 mittels des Verfahrens zum schnelleren Aufladen der Batterie 87 eingesetzt werden. Mittels des vorteilhaften Verfahrens können deshalb generatorische Verzögerungen von bis zu 0,35 g oder höher erreicht werden.

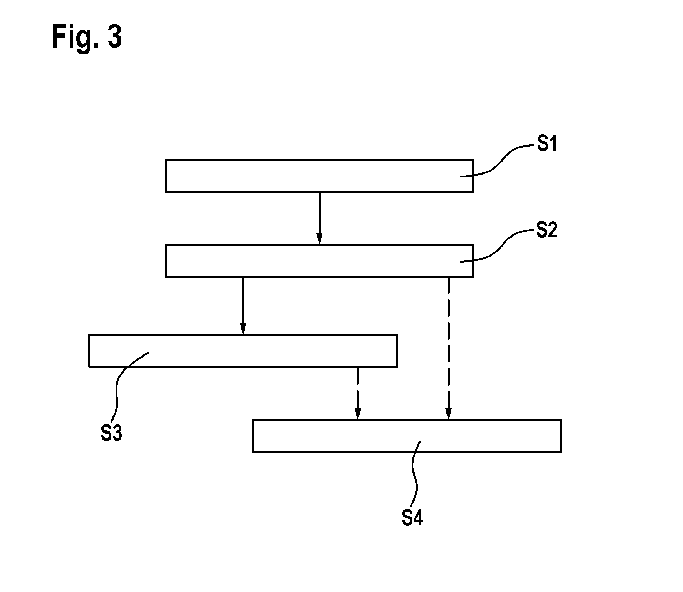

Fig. 3 zeigt ein Flussdiagramm zum Erläutern einer zweiten Ausführungsform des Verfahrens zum Betreiben eines rekuperativen Bremssystems eines Fahrzeugs.

Auch das Verfahren der Fig. 3 kann mittels der oben beschriebenen Steuervorrichtung ausgeführt werden, ohne auf deren Verwendung limitiert zu sein. Das Verfahren weist die oben schon beschriebenen Verfahrensschritte auf. Zusätzlich werden bei dem Verfahren eine erste Betätigungsstärke einer Betätigung eines Bremspedals und eine zweite Betätigungsstärke einer Betätigung eines Gaspedals als die mindestens eine Betätigungsstärke ermittelt. Danach werden die erste Soll-Größe, die zweite Soll-Größe und/oder die mindestens eine Soll-Bremsmomentgröße unter Berücksichtigung zumindest der ersten Betätigungsstärke und der zweiten Betätigungsstärke festgelegt. Dies geschieht gemäß den folgenden Verfahrensschritten:
In einem Verfahrensschritt S1 wird anhand der zweiten Betätigungsstärke ein Lösen des Gaspedals festgestellt. Dabei kann das Gaspedal auch noch nicht vollständig gelöst sein. In einem gleichzeitig oder kurz danach ausgeführten Verfahrensschritt S2 wird die erste Betätigungsstärke ermittelt und ausgewertet. Bei einem Erkennen einer Nichtbetätigung des Bremspedals anhand der ersten Betätigungsstärke in dem Verfahrensschritt S2 (und eines Lösens des Gaspedals anhand der zweiten Betätigungsstärke in dem Verfahrensschritt S1) wird ein Verfahrensschritt S3 ausgeführt. In dem Verfahrensschritt S3 wird die erste Soll-Größe gleich Null und die zweite Soll-Größe ungleich Null festgelegt. Bereits beim Lösen des Gaspedals wird somit schon vor einem Betätigen des Bremspedals an mindestens einer der Achsen des Fahrzeugs generatorisch gebremst. Das bereits beim Lösen des Gaspedals aktivierte Generator-Bremsmoment an mindestens einer Achse kann beispielsweise zwischen 0,1 g und 0,2 g liegen. In dem hier beschriebenen Verfahren wird beim Lösen des Gaspedals und vor einer Bremsanforderung des Fahrers an der nicht-entkoppelbaren zweiten Achse generatorisch gebremst. Die Ausführbarkeit des hier beschriebenen Verfahrens ist jedoch nicht darauf limitiert. Beispielsweise können auch die erste Soll-Größe ungleich Null und die zweite Soll-Größe gleich Null festgelegt werden, so dass beim Lösen des Gaspedals an der entkoppelbaren ersten Achse generatorisch gebremst wird. Es kann alternativ jedoch auch an beiden Achsen generatorisch gebremst werden.

Bei/ab einem Erkennen einer Betätigung des Bremspedals anhand der ersten Betätigungsstärke in dem Verfahrensschritt S2 wird ein Verfahrensschritt S4 ausgeführt. In dem Verfahrensschritt S4 wird die erste Soll-Größe ungleich Null festgelegt. Optionaler Weise kann in dem Verfahrensschritt S4 auch die zweite Soll-Größe ungleich Null festgelegt werden. Vorzugsweise wird auch an der nichtentkoppelbaren zweiten Achse vor einem Überschreiten des Leerwegs ausschließlich generatorisch gebremst. Nach einem Überschreiten des Leerwegs wird automatisch an der nicht-entkoppelbaren zweiten Achse das zweite hydraulische Bremsmoment aufgebaut.

Auch bei dem hier beschriebenen Verfahren kann ein zeitliches Variieren der maximal ausübbaren Generator-Bremsmomente an der entkoppelbaren Achse mittels der oben beschriebenen Vorgehensweise verblendet werden. Es ist aber auch möglich, das an der nicht-entkoppelbaren Achse wirkende zweite Generator-Bremsmoment nicht zu verblenden, sondern bei sinkender Fahrzeuggeschwindigkeit durch aktives Bestromen des mindestens einen Elektromotors bis zu einer sehr kleinen Geschwindigkeit auf konstantem Niveau zu halten. Mittels einer e-Funktion kann das zweite Generator-Bremsmoment (z.B. sehr kurz vor dem Stillstand des Fahrzeugs) ausgeblendet werden. Dadurch wird das Fahrzeug kurz vor dem Stillstand (trotz einer konstanten Bremsbetätigung des Fahrers) etwas entbremst. Dies entspricht einer Art von "Soft Stop" und äußert sich für den Fahrer in einem verbesserten Bremskomfort he eine merkliche/wesentliche Bremswegverlängerung.

## Patentansprüche

1. Steuervorrichtung (10) für ein rekuperatives Bremssystem eines Fahrzeugs mit:
einer Motor- und Hydraulikansteuereinrichtung (12), mittels welcher unter Berücksichtigung mindestens eines von mindestens einem fahrzeugeigenen Sensor (14) bereitgestellten Sensorsignals (16) bezüglich einer Betätigungsstärke einer Betätigung mindestens eines Eingabeelements (23)
- eine erste Soll-Größe (18) bezüglich eines mittels mindestens eines Elektromotors (22) des Bremssystems auf mindestens ein erstes Rad (24), welches mindestens einem ersten Radbremszylinder (26) eines ersten Bremskreises (28) des Bremssystems zugeordnet ist, auszuübenden ersten Soll-Motorbremsmoments ungleich Null festlegbar, und
- eine zweite Soll-Größe (20) bezüglich eines mittels des mindestens einen Elektromotors (22) des Bremssystems auf mindestens ein zweites Rad (30), welches mindestens einem zweiten Radbremszylinder (32) eines zweiten Bremskreises (34) des Bremssystems zugeordnet ist, auszuübenden zweiten Soll-Motorbremsmoments ungleich Null festlegbar sind,
und an den mindestens einen Elektromotor (22) ausgebbar sind;
**dadurch gekennzeichnet, dass**
mittels der Motor- und Hydraulikansteuereinrichtung (12) zusätzlich unter Berücksichtigung zumindest des mindestens einen Sensorsignals (16), der ersten Soll-Größe (18), der zweiten Soll-Größe (20) und/oder mindestens einer davon abgeleiteten Größe ein Schließsignal (44) an ein Trennventil (46), über welches der mindestens eine erste Radbremszylinder (24) des ersten Bremskreises (26) mit einem Hauptbremszylinder (48) des Bremssystems verbunden ist, ausgebbar ist.

2. Steuervorrichtung (10) nach Anspruch 1, wobei die Motor- und Hydraulikansteuereinrichtung (12) zusätzlich dazu ausgelegt ist, unter Berücksichtigung zumindest des mindestens einen Sensorsignals (16), der ersten Soll-Größe (18), der zweiten Soll-Größe (20) und/oder mindestens einer davon abgeleiteten Größe mindestens eine Soll-Bremsmomentgröße bezüglich eines mittels des mindestens einen ersten Radbremszylinders (26) des ersten Bremskreises (28) auf das mindestens eine zugeordnete erste Rad (24) auszuübenden Soll-Bremsmoments festzulegen und mindestens eine hydraulische Komponente (50, 52) des ersten Bremskreises (28) mittels mindestens eines Hydrauliksteuersignals (54, 56) so anzusteuern, dass ein Bremsdruck des mindestens einen ersten Radbremszylinders (26) des ersten Bremskreises (28) mittels der mindestens einen hydraulischen Komponente (50, 52) entsprechend der mindestens einen festgelegten Soll-Bremsmomentgröße einstellbar ist.

3. Steuervorrichtung (10) nach Anspruch 2, wobei die Motor- und Hydraulikansteuereinrichtung (12) dazu ausgelegt ist, mindestens eine Pumpe (50) des ersten Bremskreises (28), welche ansaugseitig mit einem Bremsflüssigkeitsreservoir (58) und förderseitig mit dem mindestens einen ersten Radbremszylinders (26) des ersten Bremskreises (28) verbunden ist, als die mindestens eine hydraulische Komponente (50, 52) mittels des mindestens einen Hydrauliksteuersignals (54, 56) so anzusteuern, dass der Bremsdruck des mindestens einen ersten Radbremszylinders (26) des ersten Bremskreises (28) mittels der mindestens einen Pumpe (50) entsprechend der mindestens einen festgelegten Soll-Bremsmomentgröße steigerbar ist.

4. Steuervorrichtung (10) nach Anspruch 2 oder 3, wobei die Motor- und Hydraulikansteuereinrichtung (12) dazu ausgelegt ist, mindestens ein stetig stellbares Ventil (52) des ersten Bremskreises (28), über welches der mindestens eine erste Radbremszylinder (26) des ersten Bremskreises (28) mit dem Bremsflüssigkeitsreservoir (58) verbunden ist, als die mindestens eine hydraulische Komponente(50, 52) mittels des mindestens einen Hydrauliksteuersignals (54, 56) so anzusteuern, dass der Bremsdruck des mindestens einen ersten Radbremszylinders (26) des ersten Bremskreises (28) entsprechend der mindestens einen festgelegten Soll-Bremsmomentgröße reduzierbar ist.

5. Steuervorrichtung (10) nach einem der vorhergehenden Ansprüche, wobei die Motor- und Hydraulikansteuereinrichtung (12) dazu ausgelegt ist, die erste Soll-Größe (18), die zweite Soll-Größe (20) und/oder die mindestens eine Soll-Bremsmomentgröße unter Berücksichtigung zumindest eines ersten Sensorsignals bezüglich einer ersten Betätigungsstärke einer Betätigung eines Bremspedals und eines zweiten Sensorsignals bezüglich einer zweiten Betätigungsstärke einer Betätigung eines Gaspedals als das mindestens eine Sensorsignal (16) festzulegen.

6. Rekuperatives Bremssystem für ein Fahrzeug mit einer Steuervorrichtung (10) nach einem der vorhergehenden Ansprüche.

7. Verfahren zum Betreiben eines rekuperativen Bremssystems eines Fahrzeugs mit den Schritten:
Ermitteln mindestens einer Betätigungsstärke einer durch einen Fahrer des Fahrzeugs aktuell ausgeführten Betätigung mindestens eines Eingabeelements (23);
Festlegen einer ersten Soll-Größe (18) bezüglich eines mittels mindestens eines Elektromotors (22) des Bremssystems auf mindestens ein erstes Rad (24), welches mindestens einem ersten Radbremszylinder (26) eines ersten Bremskreises (28) des Bremssystems zugeordnet ist, auszuübenden ersten Soll-Motorbremsmoments ungleich Null unter Berücksichtigung der mindestens einen ermittelten Betätigungsstärke;
Festlegen einer zweiten Soll-Größe (20) bezüglich eines mittels des mindestens einen Elektromotors (22) des Bremssystems auf mindestens ein zweites Rad (30), welches mindestens einem zweiten Radbremszylinder (32) eines zweiten Bremskreises (34) des Bremssystems zugeordnet ist, auszuübenden zweiten Soll-Motorbremsmoments ungleich Null unter Berücksichtigung der mindestens einen ermittelten Betätigungsstärke; und
Ansteuern des mindestens einen Elektromotors (22) so, dass ein der ersten Soll-Größe (18) entsprechendes erstes Generator-Bremsmoment (36, bg1) auf das mindestens eine erste Rad (24) und ein der zweiten Soll-Größe (20) entsprechendes zweites Generator-Bremsmoment (38, bg2) auf das mindestens eine zweite Rad (30) ausgeübt werden;
**gekennzeichnet durch** den Schritt:
Schließen eines Trennventils (46), über welches der mindestens eine erste Radbremszylinder (26) des mindestens einen ersten Bremskreises (28) mit einem Hauptbremszylinder (48) des Bremssystems verbunden ist, unter Berücksichtigung der mindestens einen ermittelten Betätigungsstärke, der ersten Soll-Größe (18), der zweiten Soll-Größe (20) und/oder mindestens einer davon abgeleiteten Größe.

8. Verfahren nach Anspruch 7, wobei unter Berücksichtigung zumindest der mindestens einen Betätigungsstärke, der ersten Soll-Größe (18), der zweiten Soll-Größe (20) und/oder mindestens einer davon abgeleiteten Größe mindestens eine Soll-Bremsmomentgröße bezüglich eines mittels des mindestens einen ersten Radbremszylinders (26) des ersten Bremskreises (28) auf das mindestens eine zugeordnete erste Rad (24) auszuübenden Soll-Bremsmoments festgelegt wird, und mindestens eine hydraulische Komponente (50, 52) des ersten Bremskreises (28) so angesteuert wird, dass ein Bremsdruck des mindestens einen ersten Radbremszylinders (26) des ersten Bremskreises (28) mittels der mindestens einen hydraulischen Komponente (50, 52) entsprechend der mindestens einen festgelegten Soll-Bremsmomentgröße eingestellt wird.

9. Verfahren nach Anspruch 7 oder 8, wobei mindestens eine Pumpe (50) des ersten Bremskreises (28), welche ansaugseitig mit einem Bremsflüssigkeitsreservoir (58) und förderseitig mit dem mindestens einen ersten Radbremszylinders (26) des ersten Bremskreises (28) verbunden ist, als die mindestens eine hydraulische Komponente (50, 52) so angesteuert wird, dass der Bremsdruck des mindestens einen ersten Radbremszylinders (26) des ersten Bremskreises (28) mittels der mindestens einen Pumpe (50) entsprechend der mindestens einen festgelegten Soll-Bremsmomentgröße gesteigert wird.

10. Verfahren nach einem der Ansprüche 7 bis 9, wobei mindestens ein stetig stellbares Ventil (52) des ersten Bremskreises (28), über welches der mindestens eine erste Radbremszylinder (26) des ersten Bremskreises (28) mit dem Bremsflüssigkeitsreservoir (58) verbunden ist, als die mindestens eine hydraulische Komponente (50, 52) so angesteuert wird, dass der Bremsdruck des mindestens einen ersten Radbremszylinders (26) des ersten Bremskreises (28) entsprechend der mindestens einen festgelegten Soll-Bremsmomentgröße reduziert wird.

11. Verfahren nach einem der Ansprüche 7 bis 10, wobei eine erste Betätigungsstärke einer Betätigung eines Bremspedals und eine zweite Betätigungsstärke einer Betätigung eines Gaspedals als die mindestens eine Betätigungsstärke ermittelt werden, und wobei die erste Soll-Größe (18), die zweite Soll-Größe (20) und/oder die mindestens eine Soll-Bremsmomentgröße unter Berücksichtigung zumindest der ersten Betätigungsstärke und der zweiten Betätigungsstärke festgelegt werden.

12. Verfahren nach Anspruch 11, wobei bei einem Erkennen einer Nichtbetätigung des Bremspedals anhand der ersten Betätigungsstärke (S2) und eines Lösens des Gaspedals anhand der zweiten Betätigungsstärke (S1) die erste Soll-Größe (18) gleich Null und die zweite Soll-Größe (20) ungleich Null festgelegt wird (S3).

13. Verfahren nach Anspruch 11 oder 12, wobei bei einem Erkennen einer Betätigung des Bremspedals anhand der ersten Betätigungsstärke (S1) die erste Soll-Größe (18) ungleich Null festgelegt wird (S4).

14. Verfahren nach einem der Ansprüche 11 bis 13, wobei bei kleinen Geschwindigkeiten an einer dem zweiten Bremskreis (34) zugeordneten nicht-verblendfähigen Achse (42) der mindestens eine Elektromotor (22) derart eingesetzt wird, dass die Fahrzeugverzögerung weitgehend konstant bleibt und erst bei sehr kleinen Geschwindigkeiten ein Übergang in den Stillstand mittels einer e-Funktion erfolgt.

## Claims

1. Control device (10) for a recuperative brake system of a vehicle, having:
a motor- and hydraulics- actuation device (12) by means of which, while taking into account at least one sensor signal (16) which is made available by at least one vehicle-mounted sensor (14) and relates to an activation intensity of activation of at least one input element (23),
- a first setpoint variable (18), relating to a first setpoint engine braking torque which is to be applied by means of at least one electric motor (22) of the brake system to at least one first wheel (24) which is assigned to at least one first wheel brake cylinder (26) of a first brake circuit (28) the brake system, can be defined as being unequal to zero, and
- a second setpoint variable (20) relating to a second setpoint engine braking torque which is to be applied by means of at least one electric motor (22) of the brake system to at least one second wheel (30) which is assigned to at least one first wheel brake cylinder (32) of a second brake circuit (34) of the brake system, can be defined as being unequal to zero,
and can be output to the at least one electric motor (22);
**characterized in that**
by means of the motor- and hydraulics- actuation device (12), while additionally taking into account at least the at least one sensor signal (16) of the first setpoint variable (18), of the second setpoint variable (20) and/or at least one variable derived therefrom, a closing signal (44) can be output to an isolating valve (46) by means of which the at least one first wheel brake cylinder (24) of the first brake circuit (26) is connected to a master brake cylinder (48) of the brake system.

2. Control device (10) according to Claim 1, wherein the motor- and hydraulics- actuation device (12) is additionally configured to define, while taking into account at least the at least one sensor signal (16), the first setpoint variable (18), the second setpoint variable (20) and/or at least one variable derived therefrom, at least one setpoint braking torque variable relating to a setpoint braking torque which is to be applied to the at least one assigned first wheel (24) by means of the at least one first wheel brake cylinder (26) of the first brake circuit (28), and to actuate at least one hydraulic component (50, 52) of the first brake circuit (28) by means of at least one hydraulics control signal (54, 56) in such a way that a brake pressure of the at least one first wheel brake cylinder (26) of the first brake circuit (28) can be set in accordance with the at least one defined setpoint braking torque variable by means of the at least one hydraulic component (50, 52).

3. Control device (10) according to Claim 2, wherein the motor- and hydraulics- actuation device (12) is configured to actuate at least one pump (50) of the first brake circuit (28), which pump is connected on the intake side to a brake fluid reservoir (58) and on the delivery side to the at least one first wheel brake cylinder (26) of the first brake circuit (28), as the at least one hydraulic component (50, 52) by means of the at least one hydraulic control signal (54, 56) in such a way that the brake pressure of the at least one first wheel brake cylinder (26) of the first brake circuit (28) can be increased in accordance with the at least one defined setpoint braking torque variable by means of the at least one pump (50).

4. Control device (10) according to Claim 2 or 3, wherein the motor- and hydraulics- actuation device (12) is configured to actuate at least one continuously adjustable valve (52) of the first brake circuit (28), by means of which valve the at least one first wheel brake cylinder (26) of the first brake circuit (28) is connected to the brake fluid reservoir (58), as the at least one hydraulic component (50, 52) by means of the at least one hydraulic control signal (54, 56), in such a way that the brake circuit of the at least one first wheel brake cylinder (26) of the first brake circuit (28) can be reduced in accordance with the at least one defined setpoint braking torque variable.

5. Control device (10) according to one of the preceding claims, wherein the motor- and hydraulics- actuation device (12) is configured to define the first setpoint variable (18), the second setpoint variable (20) and/or the at least one setpoint braking torque variable while taking into account at least one first sensor signal relating to a first activation intensity of activation of a brake pedal and of a second sensor signal relating to a second activation intensity of activation of an accelerator pedal as the at least one sensor signal (16).

6. Recuperative brake system for a vehicle having a control device (10) according to one of the preceding claims.

7. Method for operating a recuperative brake system of a vehicle having the steps:
determining at least one activation intensity of activation of at least one input element (28) which is being carried out at that time by a driver of the vehicle;
defining a first setpoint variable (18), relating to a first setpoint motor breaking torque which is to be applied by means of at least one electric motor (22) of the brake system to at least one first wheel (24), which is assigned to at least one first wheel brake cylinder (26) of a first brake circuit (28) of the brake system, to be unequal to zero while taking into account the at least one determined activation intensity;
defining a second setpoint variable (20), relating to a second setpoint motor brake torque which is to be applied by means of the at least one electric motor (22) of the brake system to at least one second wheel (30), which is assigned to at least one second wheel brake cylinder (32) of a second brake circuit (34) of the brake system, to be unequal to zero while taking into account the at least one determined activation intensity; and
actuating the at least one electric motor (22) in such a way that a first generator braking torque (36, bg1) which corresponds to the first setpoint variable (18) is applied to the at least one first wheel (24), and a second generator braking torque (38, bg2) which corresponds to the second setpoint variable (20) is applied to the at least one second wheel (30);
**characterized by** the step:
closing an isolating valve (46), by means of which the at least one first wheel brake cylinder (26) of the at least one first brake circuit (28) is connected to a master brake cylinder (48) of the brake system, while taking into account the at least one determined activation intensity, the first setpoint variable (18), the second setpoint variable (20) and/or at least one variable derived therefrom.

8. Method according to Claim 7, wherein, while taking into account at least the at least one activation intensity, the first setpoint variable (18), the second setpoint variable (20) and/or at least one variable derived therefrom, at least one setpoint braking torque variable is defined relating to a setpoint braking torque which is to be applied by means of the at least one first wheel brake cylinder (26) of the first brake circuit (28) to the at least one assigned first wheel (24), and at least one hydraulic component (50, 52) of the first brake circuit (28) is actuated in such a way that a brake pressure of the at least one first wheel brake cylinder (26) of the first brake circuit (28) is set in accordance with the at least one defined setpoint braking torque variable by means of the at least one hydraulic component (50, 52).

9. Method according to Claim 7 or 8, wherein at least one pump (50) of the first brake circuit (28), which is connected on the intake side to a brake fluid reservoir (58) and on the delivery side to the at least one first wheel brake cylinder (26) of the first brake circuit (28), is actuated as the at least one hydraulic component (50, 52) in such a way that the brake pressure of the at least one first wheel brake cylinder (26) of the first brake circuit (28) is increased in accordance with the at least one defined setpoint braking torque by means of the at least one pump (50).

10. Method according to one of Claims 7 to 9, wherein at least one continuously adjustable valve (52) of the first brake circuit (28), by means of which the at least one first wheel brake cylinder (26) of the first brake circuit (28) is connected to the brake fluid reservoir (58), is actuated as the at least one hydraulic component (50, 52) in such a way that the brake pressure of the at least one first wheel brake cylinder (26) of the first brake circuit (28) is reduced in accordance with the at least one defined setpoint braking torque variable.

11. Method according to one of Claims 7 to 10, wherein a first activation intensity of activation of a brake pedal and a second activation intensity of activation of an accelerator pedal are determined as the at least one activation intensity, and wherein the first setpoint variable (18), the second setpoint variable (20) and/or the at least one setpoint braking torque variable are defined taking into account at least the first activation intensity and the second activation intensity.

12. Method according to Claim 11, wherein, when non-activation of the brake pedal is detected on the basis of the first activation intensity (S2), and release of the accelerator pedal is detected on the basis of the second activation intensity (S1), the first setpoint variable (18) is defined as being equal to zero, and the second setpoint variable (20) is defined as being unequal to zero (S3).

13. Method according to Claim 11 or 12, wherein, when activation of the brake pedal is detected on the basis of the first activation intensity (S1), the first setpoint variable (18) is defined as being unequal to zero (S4).

14. Method according to one of Claims 11 to 13, wherein, at low speeds at a non-blendable axle (42) which is assigned to the second brake circuit (34), the at least one electric motor (22) is used in such a way that the deceleration of the vehicle remains largely constant and a transition into the stationary state by means of an e-function takes place only at very low speeds.

## Revendications

1. Dispositif de commande (10) pour un système de freinage récupératif d'un véhicule avec :
un dispositif de commande de moteur et d'hydraulique (12), à l'aide duquel, en tenant compte d'au moins un signal de capteur (16) mis à disposition par au moins un capteur (14) propre au véhicule par rapport à une force d'actionnement d'un actionnement d'au moins un élément d'entrée (23) :
- une première grandeur théorique (18) peut être déterminée comme différente de zéro par rapport à un premier couple de freinage de moteur théorique à exercer à l'aide d'au moins un moteur électrique (22) du système de freinage sur au moins une première roue (24) à laquelle est associé au moins un premier cylindre de frein de roue (26) d'un premier circuit de freinage (28) du système de freinage ; et
- une deuxième grandeur théorique (20) peut être déterminée comme différente de zéro par rapport à un deuxième couple de freinage de moteur théorique à exercer à l'aide de l'au moins un moteur électrique (22) du système de freinage sur au moins une deuxième roue (30) à laquelle est associé au moins un deuxième cylindre de frein de roue (32) d'un deuxième circuit de freinage (34) du système de freinage ;
et pouvant être envoyés à l'au moins un moteur électrique (22) ;
**caractérisé en ce que** :
un signal de fermeture (44) peut être envoyé à une soupape d'isolement (46) via laquelle l'au moins un premier cylindre de frein de roue (24) du premier circuit de freinage (26) est relié à un maître-cylindre de frein (48) du système de freinage à l'aide du dispositif de commande de moteur et d'hydraulique (12) en tenant compte en outre au moins de l'au moins un signal de capteur (16), de la première grandeur théorique (18), de la deuxième grandeur théorique (20) et/ou d'au moins une grandeur en découlant.

2. Dispositif de commande (10) selon la revendication 1, le dispositif de commande de moteur et d'hydraulique (12) étant en outre conçu pour déterminer au moins une grandeur de couple de freinage théorique par rapport à un couple de freinage théorique à exercer à l'aide de l'au moins un premier cylindre de frein de roue (26) du premier circuit de freinage (28) sur l'au moins une première roue (24) associée en tenant compte au moins d'au moins un signal de capteur (16), de la première grandeur théorique (18), de la deuxième grandeur théorique (20) et/ou d'au moins une grandeur en découlant et pour commander au moins de telle sorte un composant hydraulique (50, 52) du premier circuit de freinage (28) à l'aide d'au moins un signal de commande hydraulique (54, 56) qu'une pression de freinage de l'au moins un premier cylindre de frein de roue (26) du premier circuit de freinage (28) peut être réglée à l'aide de l'au moins un composant hydraulique (50, 52) en fonction de l'au moins une grandeur de couple de freinage théorique déterminée.

3. Dispositif de commande (10) selon la revendication 2, le dispositif de commande de moteur et d'hydraulique (12) étant conçu pour commander à l'aide de l'au moins un signal de commande hydraulique (54, 56) au moins une pompe (50) du premier circuit de freinage (28) reliée du côté d'aspiration à un réservoir de liquide de frein (58) et reliée du côté d'extraction à l'au moins un premier cylindre de frein de roue (26) du premier circuit de freinage (28), sous la forme de l'au moins un composant hydraulique (50, 52), de telle sorte que la pression de freinage de l'au moins un premier cylindre de frein de roue (26) du premier circuit de freinage (28) peut augmenter à l'aide de l'au moins une pompe (50) en fonction de l'au moins une grandeur de couple de freinage théorique déterminée.

4. Dispositif de commande (10) selon la revendication 2 ou 3, le dispositif de commande de moteur et d'hydraulique (12) étant conçu pour commander à l'aide de l'au moins un signal de commande hydraulique (54, 56) au moins une soupape (52) réglable en continu du premier circuit de freinage (28) via laquelle l'au moins un premier cylindre de frein de roue (26) du premier circuit de freinage (28) est relié au réservoir de liquide de frein (58), sous la forme de l'au moins un composant hydraulique (50, 52), de telle sorte que la pression de freinage de l'au moins un premier cylindre de frein de roue (26) du premier circuit de freinage (28) peut être réduite en fonction de l'au moins une grandeur de couple de freinage théorique déterminée.

5. Dispositif de commande (10) selon l'une quelconque des revendications précédentes, le dispositif de commande de moteur et d'hydraulique (12) étant conçu pour déterminer la première grandeur théorique (18), la deuxième grandeur théorique (20) et/ou l'au moins une grandeur de couple de freinage théorique en tenant compte d'au moins un premier signal de capteur par rapport à une première force d'actionnement d'un actionnement d'une pédale de frein et d'un deuxième signal de capteur par rapport à une deuxième force d'actionnement d'un actionnement d'une pédale d'accélération sous la forme de l'au moins un signal de capteur (16).

6. Système de freinage récupératif pour un véhicule avec un dispositif de commande (10) selon l'une quelconque des revendications précédentes.

7. Procédé de fonctionnement d'un système de freinage récupératif d'un véhicule avec les étapes suivantes :
détermination d'au moins une force d'actionnement d'un actionnement, actuellement effectué par un conducteur du véhicule, d'au moins un élément d'entrée (23) ;
détermination d'une première grandeur théorique (18) différente de zéro en fonction d'un premier couple de freinage de moteur théorique à exercer à l'aide d'au moins un moteur électrique (22) du système de freinage sur au moins une première roue (24) à laquelle est associé au moins un premier cylindre de frein de roue (26) d'un premier circuit de freinage (28) du système de freinage en tenant compte de l'au moins une force d'actionnement déterminée ;
détermination d'une deuxième grandeur théorique (20) différente de zéro en fonction d'un deuxième couple de freinage de moteur théorique à exercer à l'aide de l'au moins un moteur électrique (22) du système de freinage sur au moins une deuxième roue (30) à laquelle est associé au moins un deuxième cylindre de frein de roue (32) d'un deuxième circuit de freinage (34) du système de freinage en tenant compte de l'au moins une force d'actionnement déterminée ; et
commande de l'au moins un moteur électrique (22) de telle sorte qu'un premier couple de freinage de générateur (36, bg1) correspondant à la première grandeur théorique (18) est exercé sur l'au moins une première roue (24) et qu'un deuxième couple de freinage de générateur (38, bg2) correspondant à la deuxième grandeur théorique (20) est exercé sur l'au moins une deuxième roue (30) ;
**caractérisé par** les étapes suivantes :
fermeture d'une soupape d'isolement (46) via laquelle l'au moins un premier cylindre de frein de roue (26) de l'au moins un premier circuit de freinage (28) est relié à un maître-cylindre de frein (48) du système de freinage, en fonction de l'au moins une force d'actionnement déterminée, de la première grandeur théorique (18), de la deuxième grandeur théorique (20) et/ou d'au moins une grandeur en découlant.

8. Procédé selon la revendication 7, au moins une grandeur de couple de freinage théorique étant déterminée en fonction d'un couple de freinage théorique à exercer à l'aide de l'au moins un premier cylindre de frein de roue (26) du premier circuit de freinage (28) sur l'au moins une première roue (24) associée en fonction au moins de l'au moins une force d'actionnement, de la première grandeur théorique (18), de la deuxième grandeur théorique (20) et/ou d'au moins une grandeur en découlant, et au moins un composant hydraulique (50, 52) du premier circuit de freinage (28) étant commandé de telle sorte qu'une pression de freinage de l'au moins un premier cylindre de frein de roue (26) du premier circuit de freinage (28) est réglée à l'aide de l'au moins un composant hydraulique (50, 52) en fonction de l'au moins une grandeur de couple de freinage théorique déterminée.

9. Procédé selon la revendication 7 ou 8, au moins une pompe (50) du premier circuit de freinage (28) reliée du côté d'aspiration à un réservoir de liquide de frein (58) et reliée du côté d'extraction à l'au moins un premier cylindre de frein de roue (26) du premier circuit de freinage (28), sous la forme de l'au moins un composant hydraulique (50, 52), étant commandée de telle sorte que la pression de freinage de l'au moins un premier cylindre de frein de roue (26) du premier circuit de freinage (28) est augmentée à l'aide de l'au moins une pompe (50) en fonction de l'au moins une grandeur de couple de freinage théorique déterminée.

10. Procédé selon l'une quelconque des revendications 7 à 9, au moins une soupape (52) réglable en continu du premier circuit de freinage (28) via laquelle l'au moins un premier cylindre de frein de roue (26) du premier circuit de freinage (28) est relié au réservoir de liquide de frein (58), sous la forme de l'au moins un composant hydraulique (50, 52), est commandée de telle sorte que la pression de freinage de l'au moins un premier cylindre de frein de roue (26) du premier circuit de freinage (28) est réduite en fonction de l'au moins une grandeur de couple de freinage théorique déterminée.

11. Procédé selon l'une quelconque des revendications 7 à 10, une première force d'actionnement d'un actionnement d'une pédale de frein et une deuxième force d'actionnement d'un actionnement d'une pédale d'accélération étant déterminées comme l'au moins une force d'actionnement et la première grandeur théorique (18), la deuxième grandeur théorique (20) et/ou l'au moins une grandeur de couple de freinage théorique étant déterminées en fonction au moins de la première force d'actionnement et de la deuxième force d'actionnement.

12. Procédé selon la revendication 11, la première grandeur théorique (18) étant déterminée comme égale à zéro et la deuxième grandeur théorique (20) étant déterminée comme non égale à zéro (S3) en cas de détection d'un non-actionnement de la pédale de frein à l'aide de la première force d'actionnement (S2) et d'un desserrement de la pédale d'accélération à l'aide de la deuxième force d'actionnement (S1).

13. Procédé selon la revendication 11 ou 12, la première grandeur théorique (18) étant déterminée comme différente de zéro (S4) en cas de détection d'un actionnement de la pédale de frein à l'aide de la première force d'actionnement (S1).

14. Procédé selon l'une quelconque des revendications 11 à 13, l'au moins un moteur électrique (22) étant utilisé, en présence de faibles vitesses au niveau d'un essieu (42) ne pouvant être parementé associé au deuxième circuit de freinage (34), de telle sorte que le ralentissement du véhicule reste largement constant et que ce ne soit qu'en présence de très faibles vitesses qu'une transition se produise pour passer à l'arrêt à l'aide d'une e-fonction.
